# EUROPEAN PATENT SPECIFICATION

(11) **EP 3 564 339 B1**
(45) Date of publication and mention of the grant of the patent: **17.03.2021**
(21) Application number: 18170318.2
(22) Date of filing: 02.05.2018
(51) Int. Cl.: C09K 11/66, C09K 11/59, C09K 11/02

(54) **FUNCTIONALIZED SEMICONDUCTOR NANOPARTICLES AND METHOD FOR THE MANUFACTURE THEREOF**
FUNKTIONALISIERTE HALBLEITERNANOPARTIKEL UND VERFAHREN ZUR HERSTELLUNG DAVON
NANOPARTICULES SEMICONDUCTRICES FONCTIONNALISÉES ET LEUR PROCÉDÉ DE FABRICATION

(43) Date of publication of application: 06.11.2019
(73) Proprietor: Universiteit van Amsterdam, 1012 WX Amsterdam (NL); Universiteit Twente, 7522 NB Enschede (NL)
(72) Inventor: NIE, Hui, 7522 NB ENSCHEDE (NL); NEWELL, Katerina, 1098 XH AMSTERDAM (NL); PAULUSSE, Jos Marie Johannes, 7522 NB ENSCHEDE (NL)
(74) Representative: De Vries & Metman

(56) References cited:
- US-A1- 2004 036 130
- US-A1- 2007 098 988
- US-A1- 2007 298 536
- L. A. ASLANOV ET AL: "Synthesis and properties of nanosilicon stabilized by butyl and perfluorobutyl ligands", RUSSIAN JOURNAL OF COORDINATION CHEMISTRY, vol. 39, no. 6, 1 June 2013 (2013-06-01), pages 427-431, XP055518314, US ISSN: 1070-3284, DOI: 10.1134/S1070328413060018

## Description

The present invention pertains to functionalized nanoparticles and a method for manufacturing them.

Quantum dots (QD) are semiconductor based nanoparticles which display a size dependent light emission at specific frequencies upon excitation by electricity or light. By changing the physical or chemical properties of the quantum dots, in particular their size, shape, and/or composition, or surface capping, the frequency of the emitted light can be tuned. Quantum dots have potential in a number of applications including LEDs, displays, medical imaging, transistors, solar cells, as well as diode lasers, second-harmonic generation and quantum computing. Silicon quantum dots are of particular interest in view of the wide availability of silicon, its nontoxic character, and their optoelectronic properties. Germanium quantum dots are likewise of interest as well due to their attractive optoelectronic properties.

One way of tuning the properties of quantum dots, including the frequency of the emitted light, is by modifying the properties of the surface of the particles, e.g., by grafting specific organic or inorganic groups onto the surface. This process may also be indicated as passivation.

Numerous organic passivation reagents and methods have been reported, such as hydrosilylation of H-terminated silicon quantum dots with alkenes, and nucleophilic substitution of halogen-terminated silicon quantum dots with Grignard reagents or metal alkyl reagents. Through these processes, in most cases, hydrocarbon-capped silicon quantum dots are obtained.

It has been found that there is need in the art for a method which allows further tuning of the emission spectrum of silicon quantum dots. In particular, it has been found that there is need for a method which enables a shift in the red-direction of the emitted light. For example, most silicon quantum dots emit light in the blue range of the spectrum, that is, the emission spectrum has a peak at about 450 nm. To bring quantum dots to their full potential it is necessary to have quantum dots which emit light in other parts of the spectrum. Among others, there is need in the art for quantum dots which emit light in the green part of the spectrum, i.e. in the range of 495-570 nm.

The present invention provides a method which allows the manufacture of quantum dots with a tailored emission spectrum. In particular, the invention provides a method which makes it possible to obtain quantum dots with an emission spectrum which has shows a shift in the red direction as compared to blue quantum dots. In one embodiment the present invention provides a method which allows the manufacture of quantum dots with an emission spectrum which shows a shift in the red-direction of 20-80 nm as compared to quantum dots substituted with hydrocarbon substituents. In one embodiment, the invention provides a method for manufacturingquantum dots with a peak in their emission spectrum in the range of 495-570 nm, i.e. in the green range. The invention also pertains to quantum dots obtained by the claimed method.

In a first aspect the present invention pertains to a method for manufacturing fluoro(hydro)carbon-substituted silicon or germanium quantum dots which comprises the steps of:
- reacting a Zintl salt or intermetallic compound of post-transition metals or metalloids of silicon or germanium with a halogen-containing oxidizing agent to form halide-terminated silicon or germanium quantum dots,
- reacting the halide-terminated silicon or germanium quantum dots with a fluoro(hydro)carbon agent selected from the group of metal-fluoro(hydro)carbon compounds of the formula MR_{q}, wherein M is a metal selected from Group 1, 2, 4, 11, 12, 13, or 14 of the periodic table of elements, q is an integer which corresponds to the valence of the metal, and R is CFnHm-fluoro/hydro-carbon, wherein n is 1 or 2, m is 0 or 1, and the total of n and m is 2, wherein each R may be the same or different, metal-fluoro(hydro)carbon halide compounds of the formula NQₐRₚ wherein N is a metal selected from Group 1, 2, 4, 11, 12, 13, or 14 of the periodic table of elements, Q is a halogen selected from F, Cl, Br, or I, wherein each Q may be the same or different, a and p are integers in the range of 1-3, and the total of a and p corresponds to the valence of the metal, and R is as defined above, and metal-fluoro(hydro)carbon compounds of the formula CuR₂Li, wherein R is as defined above, to form fluoro(hydro)carbon-substituted silicon or germanium quantum dots.

In a second aspect the present invention pertains silicon or germanium quantum dots derived from a Zintl salt or intermetallic compound of post-transition metals or metalloids of silicon or germanium comprising CFnHm-fluoro/hydrocarbon groups bonded directly to the silicon or germanium of the particle.

It has been found that the specific combination of a Zintl-salt or intermetallic compounds as starting material and the specific metal-fluoro(hydro)carbon ligands used in the present invention makes it possible to obtain particles with a tailored emission spectrum, in particular an emission spectrum with a shift in the red direction as compared to blue quantum dots.

Fluoro(hydro)carbon-functionalized silicon quantum dots and their preparation has been described in the literature.

C. Qian et al. (J. Am. Chem. Soc. 2014, 136, 15849-15852) describes a method for grafting fluorohydrocarbon groups onto silicon nanoparticles, by a process in which hydride-terminated silicon nanocrystals are treated with 1H,1H,2H-perfluoro-1-decene in a two-phase solvent system, wherein the first solvent is n-decane and the second solvent is 1H,2H,2H-perfluoro-1-decene. The two solvents do not mix. The reaction is carried out in a closed vial for three hours at a temperature of 170°C, which is above the boiling point of the 1H,1H,2H-perfluoro-1-decene. The reaction was extended to 24 hours to increase the surface coverage. This reference does not describe ligands used in the present invention or the change in the emission spectrum obtained therewith.

T.K. Purkait (J. Am. Chem. Soc. 2016, 138, 7114-7120) describes grafting various types of groups onto the surface of silicon quantum dots. More specifically, alkoxy-terminated silicon quantum dots were obtained by reacting hydride-terminated quantum dots with aliphatic ketones by a process comprising the steps of combining the ketone of choice with a dispersion of silicon quantum dots in toluene solvent and allowing the mixture to react at 180°C in a microwave chamber for one hour. Silicon quantum dots functionalized with aromatic ketones were obtained by an analogous process. 2-butoxy-terminated silicon quantum dots prepared by the method described above were used as starting material for the manufacture of alkyl/alkenyl substituted silicon quantum dots by combining an alkene starting material with a solution of 2-butoxy-terminated silicon quantum dots in THF. BH3•THF was added and the mixture was reacted for 1 hour at 150°C. 1H,2H,2H-perfluoro-1-hexene was used as starting material for the manufacture of fluorohydrocarbon-substituted silicon quantum dots. This reference does not describe ligands used in the present invention or the change in the emission spectrum obtained therewith.

The Purkait reference further requires the intermediate manufacture of 2-butoxy-terminated silicon quantum dots, which is an additional step.

L.A. Aslanov et al. (Russian Journal of Coordination Chemistry, 2013, Vol. 39, No. 6, 427-431) describes silicon nanocrystals with perfluorobutyl ligands. The particles are prepared from SiBr4 in the presence of 1,2-dimethoxyethane and potassium metal, resulting in the formation of bromine-terminated silicon quantum dots. The bromine-terminated quantum dots are then reacted with perfluorobutyllithium, which was prepared from perfluorobutyliodide and lithium amalgam. This reference makes use of silicon quantum dots prepared from SiBr4, which have been found to be sensitive to the incorporation of oxygen, resulting in an unpredictable change in colour. Additionally, the use of potassium described in this document is undesirable for a HSE perspective.

The method of the present invention makes it possible to obtain (per)fluoro(hydro)carbon-functionalized quantum dots with good optoelectronic properties, including a tailored emission spectrum in high quality in a stable manner. Further advantages of the method according to the invention and specific embodiments thereof will become apparent from the further specification.

The method will be discussed in more detail below.

The method according to the invention starts from a Zintl salt or intermetallic compound of post-transition metals or metalloids of silicon or germanium. Zintl salts are intermetallic compounds of group 1 or 2 metals.

Examples of suitable silicon compounds are Mg2Si, NaSi, KSi, CoSi2, B4Si, W5Si3, VSi2, CeSi2, Yb3Si5, IrSi, ZrSi2, Cu5Si, YSi2, Ni2Si, YbSi2, NbSi2, EuSi2, GeSi, SrSi2, ErSi2, PtSi, PdSi, NdSi2, BaSi2, MnSi2, CrSi2, WSi2, MoSi2, ZrSi2, Cr3Si, Mo5Si3.

For reasons of activity, availability and the absence of toxic heavy metals, the following silicon compounds are considered preferred: Mg2Si, NaSi, KSi, and Ca2Si.

Examples of suitable germanium compounds are Mg2Ge, NaGe, KGe, Ca2Ge, CuGe, GeTe, and CuGeSe.

For reasons of activity, availability and the absence of toxic heavy metals, the following germanium compounds are considered preferred: Mg2Ge, NaGe, KGe, and Ca2Ge.

Silicon quantum dots are more attractive than germanium quantum dots as silicon has wider availability and fewer toxicity issues. Therefor the use of silicon Zintl salts is considered preferred.

The silicon or germanium Zintl salt or intermetallic compound is reacted with a halogen-containing oxidizing agent to form halide-terminated silicon quantum dots.

Suitable halogen-containing oxidizing agents include C12, Br2, F2, and 12. The use of bromine as oxidizing agent is considered preferred, because it has been found to give it gives a high product yield and is practical to work with.

The Zintl salt or intermetallic compound and the oxidizing agent are brought together and allowed to react. The reaction between the Zintl salt or intermetallic compound and the oxidizing agent generally takes place in the presence of a solvent. Suitable solvents will be inert under reaction conditions in that they do not react with the Zintl salt or intermetallic compound or the oxidizing agent. Suitable solvents include organic solvents such as straight chain or branched alkanes with 4 to 18 carbon atoms, ethers, including mono-, di-, and polyethers with 4-18 carbon atoms, and fluorinated alkane compounds.

Straight chain or branched alkanes with 4 to 18 carbon atoms, in particular 6 to 12 carbon atoms have been found attractive in the method according to the invention, because they are inert under reaction conditions and are easy to work with. Examples of preferred compounds are n-heptane, and n-octane. Ethers, including mono-, di-, and polyethers with 4-18 carbon atoms have also been found suitable. The use of di- and polyethers with 4-10 carbon atoms, such as 1,2-dimethoxyethane and 1-methoxy-2-(2-methoxyethoxy)ethane) has been found to be particularly attractive. Mixtures of different solvents may also be used. It is noted that while the halogen-containing oxidizing compound generally has a good solubility in the solvent, the solubility of the Zintl salt or intermetallic compound may be relatively low. It is not necessary for the Zintl salt or intermetallic compound to actually dissolve in the solvent. This may be preferred, however, to increase the reaction rate.

The reaction mixture comprising Zintl salt or intermetallic compound and oxidizing agent is allowed to react. Suitable reaction temperatures include 0 to 200°C, in particular room temperature to 150°C. A temperature below 0°C is generally not attractive for industrial operation. A temperature above 200°C is generally not attractive because it may require relatively high pressures.

The reaction pressure is not critical, as long as the various reactants are maintained in the liquid phase. A suitable pressure will thus depend on the reaction temperature. A pressure of 1-10 bar will generally be suitable, with atmospheric pressure being preferred.

The reaction time will generally vary between 2 hours and 7 days, with lower reaction temperatures necessitating longer reaction times. Longer reaction times at lower temperatures may result in lesser side products and higher yields. Therefore, a reaction time of 24 hours to 7 days, in particular 24 hours to 5 days may be preferred. It may be preferred to combine a time in this range with a temperature in the range of range of 0-150°C.

The molar ratio between the oxidizing agent and the Zintl salt or intermetallic compound generally is in the range of 1:1 to 40:1. Outside these ranges there will either be insufficient oxidizing agent to obtain attractive conversion, or an unnecessary excess of oxidizing agent. It may be preferred for the molar ratio between the oxidizing agent and the Zintl salt or intermetallic compound to be in the range of 5:1 to 30:1, in particular 5:1 to 20:1.

The solvent generally makes up between 10 and 99 wt.% of the reaction mixture comprising Zintl salt or intermetallic compound, oxidizing agent and solvent. If the amount of solvent is below 10 wt.%, it is generally insufficient to allow proper mixing of the various reactants.

The reaction is carried out in an inert atmosphere. In particular, the presence of oxygen and water is to be avoided. Working in an inert atmosphere is within the scope of the person skilled in the art, and encompasses, e.g., the use of nitrogen blankets etc. This requires no further elucidation here.

Upon completion of the reaction, a dispersion of solid halide-terminated silicon quantum dots in a solvent will have been formed. This mixture can be used directly as starting material for the alkylation step. It is also possible to first isolate the quantum dots from the solvent by evaporation of the solvent and other low-boiling components.

In the alkylation step, the halide-terminated silicon or germanium quantum dots are with a fluoro(hydro)carbon agent to form fluoro(hydro)carbon-substituted silicon or germanium quantum dots.

The fluoro(hydro)carbon agent is selected from the group of metal-fluoro(hydro)carbon compounds of the formula MR_{q}, wherein M is a metal selected from Group 1, 2, 4, 11, 12, 13, or 14 of the periodic table of elements, q is an integer which corresponds to the valence of the metal, and R is CFnHm-fluoro/hydro-carbon, wherein n is 1 or 2, m is 0 or 1, and the total of n and m is 2, wherein each R may be the same or different,
metal-fluoro(hydro)carbon halide compounds of the formula NQₐRₚ wherein N is a metal selected from Group 1, 2, 4, 11, 12, 13, or 14 of the periodic table of elements, Q is a halogen selected from F, Cl, Br, or I, wherein each Q may be the same or different, a and p are integers in the range of 1-3, and the total of a and p corresponds to the valence of the metal, and R is as defined above, and
metal-fluoro(hydro)carbon compounds of the formula CuR₂Li, wherein R is as defined above,
to form fluoro(hydro)carbon-substituted silicon or germanium quantum dots.

The fluoro(hydro)carbon group comprises an R group which is - CFₙHₘ-fluoro/hydro-carbon, wherein n is 1 or 2, m is 0 or 1, and the total of n and m is 2. A key element of this group is the CFnHm structure, which will be corrected to the silicon or germanium of the quantum dot. In the present invention the carbon atom connected to the quantum dot thus is substituted with one or two fluoro-atoms. It has been found that the presence of one or two fluoro-atoms at the carbon atom connected to the quantum dot is essential for obtaining the desired emission spectrum.

The fluoro(hydro)carbon group in R may be an alkylgroup, alkylarylgroup, arylgroup or arylalkyl group. The group generally has 1-20 carbon atoms. To achieve the effect of the present invention, longer chains may be preferred, e.g., at least 3 carbon atoms, or at least 5 carbon atoms. However, very long chains may not provide additional benefit, while they will complicate the synthesis process. Therefore, it may be preferred for the number of carbon atoms to be at most 12, in particular at most 10.

The use of alkyl-groups may be preferred. While the alkyl group may be straight-chained or branched, the use of straight-chained compounds is considered preferred because they form a less complicated structure on the surface.

The fluoro/hydro-carbon group in R may be a perfluoro group, a perhydro group, or a group comprising both fluoro and hydrogen substituents. Various embodiments of R thus include -CHF-perfluorocarbon, CHF-perhydrocarbon, CHF-fluorohydrocarbon, - CF2-perfluorocarbon, C2F-perhydrocarbon, and C2F-fluorohydrocarbon.

The use of a perfluorohydrocarbon group may be preferred because it is believed that this will lead to attractive optoelectronic properties. In this embodiment it is preferred for n to be 2 and m to be 0, resulting in R being -CF2-perfluorocarbon, with the perfluorohydrocarbon preferably being alkyl with 3-20 carbon atoms, more preferably 3-10 carbon atoms.

In one embodiment, the alkylating agent is a metal-fluoro(hydro)carbon compound of the formula MR_{q}, wherein M is a metal selected from group 1, 2, 4, 11, 12, 13, or 14 of the periodic table of elements. For group 1 the use of lithium, sodium or potassium may be preferred. For group 2 magnesium may be preferred. For group 4 zirconium or hafnium may be preferred. For group 11 copper may be preferred. For group 12 zinc may be preferred, for group 13 boron, aluminium, gallium, and indium may be preferred. For group 14 germanium, and lead may be preferred. Overall, lithium is considered preferred, because it is believed to yield better surface passivation and higher quantum yields. Accordingly, in one embodiment an n-perfluoroalkyl lithium of the formula LiCnF2n+1 wherein n is 1-20, preferably 4-12, is used.

In another embodiment a metal-fluoro(hydro)carbon halide compound of the formula NQₐRₚ is used wherein N is a metal selected from Group 1, 2, 4, 11, 12, 13, or 14 of the periodic table of elements, Q is a halogen selected from F, Cl, Br, or I, wherein each Q may be the same or different, a and p are integers in the range of 1-3, and the total of a and p corresponds to the valence of the metal.

For the metal N and the group R, the same preferences apply as for the metal M discussed above. The halogen Q may be selected from F, Cl, Br, and I. Br and Cl may be preferred Examples of suitable compounds include fluoro(hydro)carbon magnesium halide, fluoro(hydro)carbon calcium halide, fluoro(hydro)carbon aluminium halide, fluoro(hydro)carbon zinc halide, fluoro(hydro)carbon gallium halide,
fluoro(hydro)carbon germanium halide, and fluoro(hydro)carbon indium halide. The use of fluoro(hydro)carbon magnesium bromide may be preferred in this group, as it has been found easy to work with, but other compounds are also suitable.

In one embodiment an n-perfluoroalkyl magnesium bromide of the formula BrMgCₙF₂ₙ₊₁ wherein n is 1-20, preferably 4-12 is used.

Where the metal-fluoro(hydro)carbon compound is of the formula CuR₂Li, wherein R is as defined above, the preferences for R expressed above also apply here.

The use of metal-fluoro(hydro)carbonhalide compounds may be preferred over the use of metal-perfluoro(hydro)carbon compounds, because the halide compounds may be easier to prepare. It is noted that the Aslanov reference discussed above uses a mercury-lithium amalgam in order to make the alkyl lithium compounds, which is highly toxic and very polluting.

To react the halide-terminated quantum dots with the fluoro(hydro)carbon agent the two compounds have to be brought into contact. An effective way to achieve this is to combine both compounds in a solvent. Suitable solvents for this step are the same solvents described above for the reaction between the Zintl salt or intermetallic compound and the oxidizing agent. The preferences given above also apply here. The solvent used in the fluoroalkylation step can be the same or different as the solvent used in the oxidation step of the Zintl salt or intermetallic compound.

The reaction mixture comprising halide-terminated silicon quantum dots and fluoro-alkylating agent is allowed to react. Suitable reaction temperatures include 0 to 200°C, in particular room temperature to 150°C. A temperature below 0°C is generally not attractive for industrial operation. A temperature above 200°C is generally not attractive because it may require relatively high pressures.

The reaction pressure is not critical, as long as the various reactants are maintained in the liquid phase. A suitable pressure will thus depend on the reaction temperature. A pressure of 1-10 bar will generally be suitable, while atmospheric pressure may be preferred.

The reaction time will generally vary between 10 minutes and 24 hours, with lower reaction temperatures necessitating longer reaction times. A reaction time of 10 minutes to 6 hours, in particular 3 hours may be preferred.

The amount of fluoro-alkylating agent is generally in excess of the amount required to react with the halide groups at the surface of the particles. It is within the scope of the skilled person to select a suitable amount.

The solvent generally makes up between 10 and 99 wt.% of the reaction mixture comprising halide-terminated quantum dots, fluoro(hydro)carbon agent and solvent. If the amount of solvent is below 10 wt.%, it is generally insufficient to allow proper mixing of the various reactants.

In particular, the presence of oxygen and water is to be avoided. Working in an inert atmosphere is within the scope of the person skilled in the art, and encompasses, e.g., the use of nitrogen blankets etc. This requires no further elucidation here.

Upon completion of the reaction, a dispersion of fluoro(hydro)carbon-substituted quantum dots in the solvent is obtained. The quantum dots can be isolated by evaporation of the solvent. If necessary, excess alkylating agent can be removed, e.g., by reaction with an alcohol.

The quantum dots can be purified by methods known in the art, e.g., washing with suitable solvents, extraction, e.g., using water/ethyl acetate, and chromatography, e.g., silica column chromatography using , e.g., ethyl acetate/heptane as eluent.

The invention makes it possible to obtain silicon or germanium quantum dots derived from a Zintl salt or intermetallic compound of post-transition metals or metalloids of silicon or germanium comprising CFnHm-fluoro/hydrocarbon groups bonded directly to the silicon or germanium of the particle.

That the particles are derived from a Zintl salt or intermetallic compound of post-transition metals or metalloids of silicon or germanium can be seen from the contaminant profile of the particles, in particular the presence of residual traces of metals from the Zintl salt or intermetallic compound.

The preferences expressed above for the Zintl salt or intermetallic compound of post-transition metals or metalloids of silicon or germanium and for the CFnHm-fluoro/hydrocarbon groups in the context of the preparation of the particles also apply here.

In one embodiment, the fluoro(hydro)carbon-substituted quantum dots that can be obtained by the method according to the invention have a number average particle size of 0.5-5 nm as determined by transmission electron microscopy.

In one embodiment, the fluoro(hydro)carbon-substituted quantum dots have a number average particle size of 2.2 +/- 0.5 nm as determined by transmission electron microscopy.

The present invention makes it possible to obtain perfluorocarbon substituted quantum dots which (after purification to remove excess alkylating agent etc) have a quantum yield of at least 1%, in particular at least 5%, more in particular at least 8%, in some embodiments at least 11%. Quantum yield can be determined through measurements in an integration sphere setup, or through relative quantum yield measurements.

In one embodiment, the particles are characterized by absorption ranging from UV (<200 nm) to (infra)red (>800 nm), though most strongly in the rang from UV to 400 nm).

In one embodiment, the particles of the present invention show an emission spectrum which shows a red-shift of 20-100 nm as compared to the same particles substituted with perhydroalkyl ligands.

In one embodiment of the present invention, the particles show an emission spectrum with a peak in the range of 495-570 nm. In the present specification UV and fluorescence emission spectra are determined at a quantum dot concentration of 0.01 g/l in ethyl acetate (>99% reagent grade).

19F NMR spectroscopy displays relatively broad signals corresponding to silicon bound perfluoroalkyl chains at chemical shifts in the -50 to -130 ppm range.

As will be evident to the skilled person, various preferred embodiments of the present invention as described above can be combined unless they are mutually exclusive.

The present invention will be elucidated by the following example, without being limited thereto or thereby.

### Example 1: preparation of substituted silicon quantum dots

First, Mg₂Si (0.5 g, 6.5 mmol) was added into n-octane (500 mL). Vacuum degassing under nitrogen filling cycles were performed three times to remove any oxygen from the reaction system. Then Br₂ (2.7 mL, 52 mmol) was added under N₂ atmosphere under continuous stirring. The suspension was stirred at 130°C for 3 days. When the reaction was completed, the suspension was kept under N₂, while solvents were removed by distillation. To the flask fresh N₂-bubbled n-octane (500 mL) was added, and the obtained halide terminated Si QD suspension was cooled on ice. Then perfluorohexylmagnesium bromide was added to the above suspension. The reaction mixture was stirred overnight, and MeOH was added dropwise to quench any excess Grignard reagents. The mixture was stirred for 1 h. The mixture was filtered and the filtrate was subsequently extracted with aqueous HCl (1M) (1×) and distilled water (3×), and finally the organic fractions were dried over Na2SO4. Solvent was removed under reduced pressure, yielding ∼134 mg Si quantum dots as a dark red solid. The quantum yields of crude products are approximately 1%. Subsequent purification via column chromatography typically yields products with increased quantum yields of 5-6%.

The particles had a particle size of 2.2 nm +/- 0.5 nm, as determined via TEM.

They showed absorption ranging from UV (<200 nm) to (infra)red (>800 nm), though most strongly in the range from UV to 400 nm). The emission maximum was at 525-530 nm.

19F NMR spectroscopy displayed relatively broad signals corresponding to silicon bound perfluoroalkyl chains at chemical shifts in the -65 to -70 ppm range, -80 to -90 ppm range and -115 to -130 ppm range.

### Example 2: comparison of emission of alkyl-substituted silicon quantum dots and perfluoroalkyl substituted quantum dots

Particles substituted with per-hydroalkyl groups were prepared as described in Dohnalová, K.; Poddubny, A. N.; Prokofiev, A. A.; de Boer, W. D.; Umesh, C. P.; Paulusse, J.M.J.; Zuilhof, H.; Gregorkiewicz, T. Light Sci. Appl. 2013, 2 (1), e47.

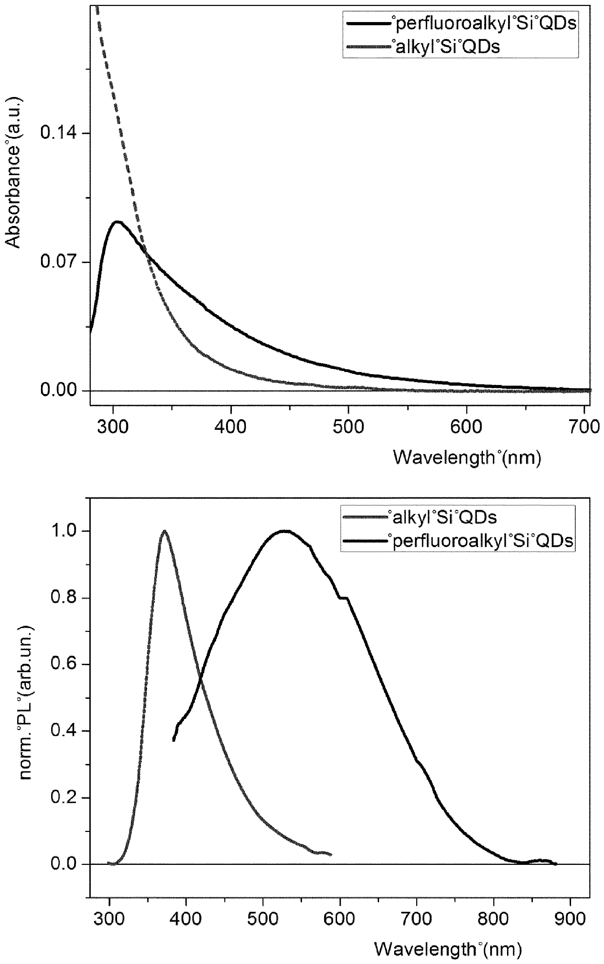

Figure 1 provides the emission spectra of the per-fluoro-alkyl substituted particles of example 1 and of the per-hydro-alkyl substituted particles of Dohnalová et al. As can be seen from the figure, the perfluoro-alkyl substituted quantum dots show a peak in the emission spectrum in the range of 495-570 nm, while the alkyl-substituted quantum dots show a peak at lower wavelengths in the range of 410-460 nm. Expressed otherwise, the emission of the per-fluoro-alkyl substituted particles shows a red-shift of about 20-80 nm.

## Claims

1. Method for manufacturing fluoro(hydro)carbon-substituted silicon or germanium quantum dots which comprises the steps of:
- reacting a Zintl salt or intermetallic compound of post-transition metals or metalloids of silicon or germanium with a halogen-containing oxidizing agent to form halide-terminated silicon or germanium quantum dots,
- reacting the halide-terminated silicon or germanium quantum dots with a fluoro(hydro)carbon agent selected from the group of
metal-fluoro(hydro)carbon compounds of the formula MR_{q}, wherein M is a metal selected from Group 1, 2, 4, 11, 12, 13, or 14 of the periodic table of elements, q is an integer which corresponds to the valence of the metal, and R is CFnHm-fluoro/hydro-carbon, wherein n is 1 or 2, m is 0 or 1, and the total of n and m is 2, wherein each R may be the same or different,
metal-fluoro(hydro)carbon halide compounds of the formula NQₐRₚ wherein N is a metal selected from Group 1, 2, 4, 11, 12, 13, or 14 of the periodic table of elements, Q is a halogen selected from F, Cl, Br, or I, wherein each Q may be the same or different, a and p are integers in the range of 1-3, and the total of a and p corresponds to the valence of the metal, and R is as defined above, and
metal-fluoro(hydro)carbon compounds of the formula CuR₂Li, wherein R is as defined above,
to form fluoro(hydro)carbon-substituted silicon or germanium quantum dots.

2. Method according to claim 1, wherein the Zintl salt or intermetallic compound of post-transition metals or metalloids of silicon or germanium is selected from Mg2Si, NaSi, KSi, Ca2Si, Mg2Ge, NaGe, KGe, and Ca2Ge.

3. Method according to claim 1 or 2, wherein the Zintl salt is a silicon Zintl salt, in particular Mg2Si, NaSi, KSi, or Ca2Si.

4. Method according to any one of the preceding claims, wherein the halogen-containing oxidizing agent is selected from Cl2, Br2, F2, 12 and mixtures thereof, and in particular Br2.

5. Method according to any one of the preceding claims, wherein R has at least 3 carbon atoms, or at least 5 carbon atoms, and/or at most 16 carbon atoms, in particular at most 11 carbon atoms.

6. Method according to any one of the preceding claims, wherein R is an alkyl group, in particular a straight-chain alkyl group.

7. Method according to any one of the preceding claims, wherein the fluoro(hydro)carbon agent is selected from the group of n-perfluoroalkyl lithium of the formula LiCnF2n+1 wherein n is 1-20, preferably 4-12, and n-perfluoroalkyl magnesium bromide of the formula BrMgCₙF₂ₙ₊₁ wherein n is 1-20, preferably 4-12.

8. Silicon or germanium quantum dots derived from a Zintl salt or intermetallic compound of post-transition metals or metalloids of silicon or germanium comprising CFnHm-fluoro/hydrocarbon groups bonded directly to the silicon or germanium of the particle.

9. Quantum dots according to claim 8, having a number average particle size of 0.5-5 nm as determined by transmission electron microscopy.

10. Quantum dots according to claim 9, having a number average particle size of 2.2 +/- 0.5 nm as determined by transmission electron microscopy.

11. Quantum dots according to any one of claims 8-10, having a quantum yield of at least 1%, in particular at least 5%, more in particular at least 8%, in some embodiments at least 11%.

12. Quantum dots according to any one of claims 8-11, having an emission spectrum which shows a red-shift of 20-100 nm as compared to the same particles substituted with perhydroalkyl ligands.

13. Quantum dots according to any one of claims 8-12, having an emission spectrum with a peak in the range of 495-570 nm.

## Patentansprüche

1. Verfahren zur Herstellung von Fluorkohlen(wasser)stoff-substituierten Silicium- oder Germanium-Quantenpunkten, welches die Schritte:
- Umsetzen eines Zintl-Salzes oder einer intermetallischen Verbindung von post-Übergangsmetallen oder -metalloiden von Silicium oder Germanium mit einem halogenhaltigen Oxidationsmittel, um Silicium- oder Germanium-Quantenpunkte mit endständigem Halogenid zu bilden,
- Umsetzen der Silicium- oder Germanium-Quantenpunkte mit endständigem Halogenid mit einem Fluorkohlen(wasser)stoffmittel, ausgewählt aus der Gruppe aus Metall-Fluorkohlen(wasser)stoff-Verbindungen der Formel MR_{q}, wobei M ein Metall, ausgewählt aus der Gruppe 1, 2, 4, 11, 12, 13 oder 14 des Periodensystems der Elemente, ist, q eine ganze Zahl ist, die der Valenz des Metalls entspricht, und R für CFnHm-Fluor-/Kohlenwasserstoff steht, wobei n für 1 oder 2 steht, m für 0 oder 1 steht und die Summe von n und m 2 ist, wobei jedes R gleich oder verschieden sein kann, Metall-Fluorkohlen(wasser)stoffhalogenid-Verbindungen der Formel NQₐRₚ, wobei N ein Metall, ausgewählt aus der Gruppe 1, 2, 4, 11, 12, 13 oder 14 des Periodensystems der Elemente, ist, Qein Halogen, ausgewählt aus F, Cl, Br oder I, ist, wobei jedes Q gleich oder verschieden sein kann, a und p ganze Zahlen im Bereich von 1-3 sind und die Summe von a und p der Valenz des Metalls entspricht und R wie vorstehend definiert ist, und Metall-Fluorkohlen(wasser)stoff-Verbindungen der Formel CuR₂Li, wobei R wie vorstehend definiert ist,
umfasst, um Fluorkohlen(wasser)stoff-substituierte Silicium- oder Germanium-Quantenpunkte zu bilden.

2. Verfahren nach Anspruch 1, wobei das Zintl-Salz oder die intermetallische Verbindung von post-Übergangsmetallen oder -metalloiden von Silicium oder Germanium ausgewählt ist aus Mg2Si, NaSi, KSi, Ca2Si, Mg2Ge, NaGe, KGe und Ca2Ge.

3. Verfahren nach Anspruch 1 oder 2, wobei das Zintl-Salz ein Silicum-Zintl-Salz, insbesondere Mg2Si, NaSi, KSi oder Ca2Si, ist.

4. Verfahren nach einem der vorhergehenden Ansprüche, wobei das halogenhaltige Oxidationsmittel ausgewählt ist aus Cl2, Br2, F2, I2 und Gemischen davon und insbesondere Br2.

5. Verfahren nach einem der vorhergehenden Ansprüche, wobei R mindestens 3 Kohlenstoffatome oder mindestens 5 Kohlenstoffatome und/oder höchstens 16 Kohlenstoffatome, insbesondere höchstens 11 Kohlenstoffatome, aufweist.

6. Verfahren nach einem der vorhergehenden Ansprüche, wobei R ein Alkylrest, insbesondere ein geradkettiger Alkylrest, ist.

7. Verfahren nach einem der vorhergehenden Ansprüche, wobei das Fluorkohlen(wasser)stoffmittel ausgewählt ist aus der Gruppe aus n-Perfluoralkyllithium der Formel LiCnF2n+1, wobei n 1-20, vorzugsweise 4-12, ist, und n-Perfluoralkylmagnesiumbromid der Formel BrMgCₙF₂ₙ₊₁, wobei n 1-20, vorzugsweise 4-12, ist.

8. Silicium- oder Germanium-Quantenpunkte, abgeleitet von einem Zintl-Salz oder einer intermetallischen Verbindung von post-Übergangsmetallen oder -metalloiden von Silicium oder Germanium, umfassend CFnHm-Fluor/Kohlenwasserstoffreste, die direkt an das Silicium oder Germanium des Teilchens gebunden sind.

9. Quantenpunkte nach Anspruch 8, welche eine zahlengemittelte Teilchengröße von 0,5-5 nm aufweisen, wie anhand von Transmissionselektronenmikroskopie ermittelt.

10. Quantenpunkte nach Anspruch 9, welche eine zahlengemittelte Teilchengröße von 2,2 +/- 0,5 nm aufweisen, wie anhand von Transmissionselektronenmikroskopie ermittelt.

11. Quantenpunkte nach einem der Ansprüche 8-10, welche eine Quantenausbeute von mindestens 1%, insbesondere mindestens 5%, noch mehr insbesondere mindestens 8%, in einigen Ausführungsformen mindestens 11% aufweisen.

12. Quantenpunkte nach einem der Ansprüche 8-11, welche ein Emissionsspektrum aufweisen, das eine Rotverschiebung von 20-100 nm verglichen mit den gleichen Teilchen, substituiert mit Perhydroalkyl-Liganden, aufweisen.

13. Quantenpunkte nach einem der Ansprüche 8-12, welche ein Emissionsspektrum mit einem Peak im Bereich von 495-570 nm aufweisen.

## Revendications

1. Procédé de fabrication de points quantiques de silicium ou germanium substitués par du fluoro(hydro)carbone qui comprend les étapes consistant à :
- faire réagir un sel de Zintl ou composé intermétallique de métaux ou métalloïdes de post-transition de silicium ou germanium avec un agent d'oxydation contenant un halogène pour former des points quantiques de silicium ou germanium à terminaison halogénure,
- faire réagir les points quantiques de silicium ou germanium à terminaison halogénure avec un agent fluoro(hydro)carbone choisi dans le groupe de
composés métal-fluoro(hydro)carbone de formule MR_{q}, où M est un métal choisi dans les colonnes 1, 2, 4, 11, 12, 13 ou 14 du tableau périodique des éléments, q est un entier qui correspond à la valence du métal, et R est CFnHm-fluoro/hydro-carbone, où n vaut 1 ou 2, m vaut 0 ou 1, et le total de n et m vaut 2, où chaque R peut être identique ou différent ;
composés halogénure de métal-fluoro(hydro)carbone de formule NQₐRₚ où N est un métal choisi dans les colonnes 1, 2, 4, 11, 12, 13 ou 14 du tableau périodique des éléments, Q est un halogène choisi parmi F, Cl, Br ou I, où chaque Q peut être identique ou différent, et a et p sont des entiers dans la plage de 1 à 3, et le total de a et p correspond à la valence du métal, et R est tel que défini ci-avant ; et
composés métal-fluoro(hydro)carbone de formule CuR₂Li, où R est tel que défini ci-avant,
pour former des points quantiques de silicium ou germanium substitués par du fluoro(hydro)carbone.

2. Procédé selon la revendication 1, dans lequel le sel de Zintl ou composé intermétallique de métaux ou métalloïdes de post-transition de silicium ou germanium est choisi parmi Mg2Si, NaSi, KSi, Ca2Si, Mg2Ge, KGe et Ca2Ge.

3. Procédé selon la revendication 1 ou 2, dans lequel le sel de Zintl est un sel de Zintl de silicium, en particulier Mg2Si, NaSi, KSi ou Ca2Si.

4. Procédé selon l'une quelconque des revendications précédentes, dans lequel l'agent d'oxydation contenant un halogène est choisi parmi Cl2, Br2, F2, I2 et leurs mélanges, et en particulier Br2.

5. Procédé selon l'une quelconque des revendications précédentes, dans lequel R a au moins 3 atomes de carbone, ou au moins 5 atomes de carbone, et/ou au plus 16 atomes de carbone, en particulier au plus 11 atomes de carbone.

6. Procédé selon l'une quelconque des revendications précédentes, dans lequel R est un groupe alkyle, en particulier un groupe alkyle à chaîne linéaire.

7. Procédé selon l'une quelconque des revendications précédentes, dans lequel l'agent fluoro(hydro)carbone est choisi dans le groupe du n-perfluoroalkyl-lithium de formule LiCnF2n+1 où n vaut 1 à 20, de préférence 4 à 12, et du n-perfluoroalkyl-bromure de magnésium de formule BrMgCₙF₂ₙ₊₁ où n vaut 1 à 20, de préférence 4 à 12.

8. Points quantiques de silicium ou germanium dérivés d'un sel de Zintl ou composé intermétallique de métaux ou métalloïdes de post-transition de silicium ou germanium comprenant des groupes CFnHm-fluoro(hydro)carbone liés directement au silicium ou germanium de la particule.

9. Points quantiques selon la revendication 8, ayant une taille moyenne de particule en nombre de 0,5 à 5 nm telle que déterminée par microscopie électronique en transmission.

10. Points quantiques selon la revendication 9, ayant une taille moyenne de particule en nombre de 2,2 +/- 0,5 nm telle que déterminée par microscopie électronique en transmission.

11. Points quantiques selon l'une quelconque des revendications 8 à 10, ayant un rendement quantique d'au moins 1 %, en particulier d'au moins 5 %, plus particulièrement d'au moins 8 %, dans certains modes de réalisation d'au moins 11 %.

12. Points quantiques selon l'une quelconque des revendications 8 à 11, ayant un spectre d'émission qui présente un décalage rouge de 20 à 100 nm tel que comparé aux même particules substituées par des ligands perhydroalkyle.

13. Points quantiques selon l'une quelconque des revendications 8 à 12, ayant un spectre d'émission avec un pic dans la plage de 495 à 570 nm.
